Europäisches Patentamt

European Patent Office

Office européen des brevets

(11) Publication number: 0 184 305
A2

# EUROPEAN PATENT APPLICATION

(21) Application number: 85307708.9

(22) Date of filing: 25.10.85

(51) Int. Cl.4: B01J 29/06

(30) Priority: 06.12.84 US 678949

(43) Date of publication of application:
11.06.86 Bulletin 86/24

(84) Designated Contracting States:
BE DE FR GB IT NL SE

(71) Applicant: MOBIL OIL CORPORATION
150 East 42nd Street
New York New York 10017(US)

(72) Inventor: Chang, Clarence Dayton
11 Murray Place
Princeton New Jersey 08540(US)
Inventor: Miale, Joseph Nicolas
25 Merritt Drive
Lawrenceville New Jersey 08648(US)

(74) Representative: West, Alan Harry
Mobil Court 3 Clements Inn
London WC2A 2EB(GB)

(54) Activation of high-silica zeolites.

(57) A method of increasing the aluminum content of a high silica content zeolite comprises impregnating the zeolite with an organoaluminum compound in the liquid phase and then calcining the impregnated zeolite to remove the organic material.

EP 0 184 305 A2

## ACTIVATION OF HIGH-SILICA ZEOLITES

This invention relates to activation of high-silica zeolites containing at least about 98 mole percent $SiO_2$.

High silica-containing zeolites are well known in the art. It is generally stated that the ion exchange capacity of a crystalline aluminosilicate zeolite is directly dependent on its aluminum content. Thus, for example, the more aluminum there is in a crystalline structure, the more cations are required to balance the electronegativity thereof, and when such cations are of the acidic type such as hydrogen, they impart catalytic activity to the crystalline material. On the other hand, high silica-containing zeolites having little or substantially no aluminum, have many important properties and characteristics and a high degree of structural stability such that they have become candidates for use in various processes including catalytic processes. Materials of this type are known in the art and include high silica-containing zeolites such as ZSM-5 (U.S. Patent 3,702,886), ZSM-11 (U.S. Patent 3,709,979), and zeolite ZSM-12 (U.S. Patent 3,832,449).

The silica-to-alumina mole ratio of a given zeolite is often variable; for example, zeolite X can be synthesized with a silica-to-alumina ratio of from 2 to 3; zeolite Y from 3 to about 6. In some zeolites, the upper limit of silica-to-alumina mole ratio is virtually unbounded. For example, U.S. Patent 3,941,871 discloses a crystalline metal organosilicate essentially free of aluminum and exhibiting an X-ray diffraction pattern characteristic of ZSM-5 type aluminosilicate. U.S. Patents 4,061,724; 4,073,865 and 4,104,294 describe microporous crystalline silicates wherein the aluminum content present is at impurity levels.

Because of the extremely low aluminum content of these high silica-containing zeolites, their ion exchange capacity is not as great as materials with a higher aluminum content. For instance, the crystalline compositions to be treated hereby have ion exchange capacity of less than about 0.7 meq/gram, whereas zeolite Y exhibits an ion exchange capacity of from 4.32 to 7.1 meq/gram. Therefore, the acid forms of these high silica materials are not as catalytically active as their higher aluminum-containing counterparts.

The novel method of this invention permits the preparation of certain high silica-containing materials which have all the desirable properties inherently possessed by high silica materials and, yet, have a catalytic activity which heretofore has only been possible to be achieved by materials having a higher aluminum content in their "as-synthesized" form.

In accordance with the present invention, there is provided a process for activating a zeolite containing at least about 98 mole percent $SiO_2$, comprising

impregnating the zeolite with a liquid containing a source of aluminum in which aluminum is bonded to or coordinated with an oxygen atom, said oxygen atom being bonded to a hydrocarbyl group of 1 to 18 carbon atoms and being selected from alkyl, alkylene, aryl, alkylaryl and alkylenearyl groups, wherein each of said hydrocarbyl groups is unsubstituted or substituted by at least one group selected from -OH, -COOH, -NH₂, -N(CH₂COOH)₂, and -COCH₃; and

calcining the impregnated zeolite at a temperature sufficient to remove said hydrocarbyl group from the zeolite and produce a zeolite of increased framework aluminum content.

As indicated above, the zeolites treated in accordance with the invention are those highly siliceous materials which contain at least about 98 mole percent $SiO_2$. Practically, a host of different zeolites may satisfy that criterion, either in the as synthesized form or by treatment of the as synthesized zeolite by art recognized methods used to reduce aluminum content, thereby increasing silicon content of a given zeolite. Such high silica content zeolites employed advantageously herein are ZSM-5, ZSM-11, ZSM-48, dealuminized ZSM-20, dealuminized zeolite Y, and zeolite Beta. ZSM-5 is described in U.S. Patents 3,702,886 and Re 29,948. ZSM-11 is described in U.S. Patent 3,709,979. ZSM-48 is described in U.S. Patent 4,375,573. Zeolite Beta is described in U.S. Patents 3,308,069 and Re. 28,341 and preparation of zeolite Beta with a silica/alumina mole ratio above the 100 to 150 maximum specified in these patents may be accomplished by extraction with acid. Zeolite Y can be synthesized only in forms which have silica/alumina ratios up to about 5 and in order to achieve higher ratios, various techniques are available to remove structural aluminum so as to obtain a more highly siliceous zeolite. Zeolite ZSM-20 may be directly synthesized with silica/alumina ratios of 7 or higher, typically in the range of 7 to 10, as described in U.S. Patents 3,972,983 and 4,021,331.

A number of different methods are known for increasing the structural silica/alumina mole ratio of various zeolites such as ZSM-20, Beta and Y. Many of these methods rely upon the removal of aluminum from the structural framework of the zeolite by chemical agents appropriate to this end. A considerable amount of work on the preparation of aluminum deficient faujasites has been performed and is reviewed in Advances in Chemistry Series No. 121, Molecular Sieves, G. T. Kerr, American Chemical Society, 1973. Specific methods for preparing dealuminized zeolites are described in the following: Catalysis by Zeolites (International Symposium on Zeolites, Lyon, September 9-11, 1980), Elsevier Scientific Publishing Co., Amsterdam, 1980 (dealuminization of zeolite Y with silicon tetrachloride); U.S. Patent 3,442,795 and G. B Patent 1,058,188 (hydrolysis and removal of aluminum by chelation); G. B. Patent 1,061,847 (acid extraction of aluminum); U.S. Patent 3,493,519 (aluminum removal by steaming and chelation); U.S. Patent 3,591,488 (aluminum removal by steaming); U.S. Patent 4,273,753 (dealuminization by silicon halides and oxyhalides); U.S. Patent 3,691,099 (aluminum extraction with acid); U.S. Patent 4,093,560 (dealuminization by treatment with salts); U.S. Patent 3,937,791 (aluminum removal with Cr(III) solutions); U.S. Patent 3,506,400 (steaming followed by chelation); U.S. Patent 3,640,681 (extraction of aluminum with acetylacetonate followed by dehydroxylation); U.S. Patent 3,836,561 (removal of aluminum with acid); Japan Patent 53/101,003 (treatment with EDTA or other materials to remove aluminum) and J. Catalysis 54 295 (1978) (hydrothermal treatment followed by acid extraction).

Highly siliceous forms of a zeolite having the structure of zeolite Y may be prepared by steaming or by acid extraction of structural aluminum (or both) but because zeolite Y in its normal, as-synthesized condition, is unstable to acid, it must first be converted to an acid-stable form. Methods for doing this are known and one of the most common forms of acid-resistant zeolite Y is known as "Ultrastable Y" (USY) which is described in U.S. Patents 3,293,192 and 3,402,996 and the publication, Society of Chemical Engineering (London) Monograph Molecular Sieves, pge 186 (1968) by C. V. McDaniel and P. K. Maher. In general, "ultrastable" refers to Y-type zeolite which is highly resistant to degradation of crystallinity by high temperature and steam treatment and is characterized by a $R_2O$ content (wherein R is Na, K or any other alkali metal ion) of less than 4 weight percent, perferably less than 1 weight percent, and a unit cell size less than 24.5 Angstroms and a silica/alumina mole ratio in the range of 3.5 to 7 or higher. The ultrastable form of Y-type zeolite is obtained primarily by a substantial reduction of the alkali metal ions and the unit cell size. The ultrastable zeolite is identified both by the smaller unit cell and the low alkali metal content in the crystal structure.

Other specific methods for increasing the silica/alumina mole ratio of zeolite Y by acid extraction are described in U.S. Patents 4,218,307, 3,591,488 and 3,691,099.

Zeolite ZSM-20 may be converted to more highly siliceous forms by a process similar to that used for zeolite Y. First, the zeolite may be converted to an "ultrastable" form which is then dealuminized by acid extraction. The conversion to the ultrastable form may suitably be carried out by the same sequence of steps used for preparing ultrastable Y. The zeolite is successively base-exchanged to the ammonium form and calcined, normally at temperatures above 700°C. The calcination should be carried out in a deep bed in order to impede removal of gaseous products. Acid extraction of the "ultrastable" ZSM-20 may be effected in the same way as mentioned above for zeolite Beta.

The first step in the process of the invention is to impregnate the zeolite with an organo aluminum compound or complex in solution or liquid form. To this end, the zeolite may be impregnated by rendering the organo aluminum compound or complex molten by heating it to a temperature at or above its melting point or by dissolving it in a solvent therefor. One solvent which may be used is liquid ammonia. Accordingly, the temperature of impregnation can range from as low as -78°C (the melting point of ammonia) to the melting point of the organo aluminum compound or complex.

The specific organo aluminum compounds and complexes employed fall within a class of compounds in which the aluminum is bonded to an oxygen atom or is coordinated with an oxygen atom, while the oxygen atom is bonded to a hydrocarbon radical having 1-18 carbon atoms, preferably 1-10 carbon atoms, and selected from alkyl, alkylene, aryl or alkylaryl and alkylenearyl radicals. The hydrocarbon radical may be unsubstituted or substituted by at least one functional group selected from -OH, -COOH, -NH₂ and -N(CH₂COOH)₂ and -COCH₃, and the alkyl or alkylene moiety may be straight chain or branched..

Examples of organo aluminum complexes used include those in which aluminum is coordinated to an oxygen atom of the chelating agent, such as acetylacetone and ethylenediamine tetra-acetic acid. The state of the art of chelating agents is described in Kirk-Othmer, "Chelating Agents," ENCYCLOPEDIA OF CHEMICAL TECHNOLOGY, John Wiley & Sons. Wiley-Interscience Publication, Vol. 5 pp. 339-367, (1979, third Edition).

Suitable organo aluminum compounds include aluminum alkoxides, preferably C₁-C₄ alkoxides, such as aluminum isopropoxide and aluminum sec-butoxide, and aluminum carboxylates.

As noted above, the organo aluminum compound or complex can be heated to render it molten for impregnation or it can be dissolved in a solvent therefor. Suitable solvents include liquid ammonia and ethanol. Preferably, impregnation is undertaken under anhydrous conditions.

The amount of aluminum incorporated into the zeolite can be controlled by increasing (or by decreasing) the amount of aluminum source used in the impregnation and by increasing or decreasing contact times. The amount of aluminum source used for impregnation based on the zeolite weight can range from 1% to a large excess of aluminum source based on the weight of the zeolite. Contact times for impregnation can range from 1 to 20 hours.

After impregnating the zeolite with the aluminum source, the impregnated zeolite is heated to a temperature at least sufficient to remove hydrocarbon substituents contained therein. Practically, the temperatures of this step range from 200°C to 600°C. This heating step can be undertaken in an inert atmosphere of air, nitrogen, helium and the like at subatmospheric, atmospheric or superatmospheric pressures for from 1 minute to 48 hours.

Conversion of the calcined aluminum impregnated zeolite to the acid form may be undertaken in various ways. In a preferred embodiment, the calcined aluminum impregnated zeolite is subjected to ammonium exchange and then to calcination to effect evolution of ammonia from the exchanged calcined aluminum impregnated zeolite.

Ammonium exchange is undertaken to effect ammonium ion exchange at sites provided by aluminum in the calcined aluminum impregnated zeolite. Generally, such exchange is effected by aqueous solutions of an ammonium source, such as ammonium nitrate, ammonium sulfate, ammonium chloride, ammonium hydroxide and mixtures thereof. Typically, the aqueous solutions of the ammonium ion source are from 0.1 to 5 normal, preferably about 1 normal. Ammonium ion exchange may be conducted at ambient temperature, or at temperatures as low as 0°C and up to 90°C. It can be undertaken in multiple stages. Contact times may range from 1 to 20 hours.

In accordance with the preferred embodiment, after ammonium ion exchange, the exchanged product is calcined at elevated temperatures ranging from 200°C to 600°C in an inert atmosphere of air, nitrogen, helium and the like at subatmospheric, atmoshperic, or superatmospheric pressures.

The products produced by the present process are characterized by increased Bronsted acidity and by an increased Alpha Value, compared to the original zeolite. As is known in the art, the Alpha Value is an approximate indication of the catalytic cracking activity of the catalyst compared to a standard catalyst and it gives the relative rate constant (rate of normal hexane conversion per volume of catalyst per unit time). It is based on the activity of the highly active silica-alumina cracking catalyst taken as an Alpha of 1 (Rate Constant = 0.016 sec⁻¹. The Alpha Test is described in U.S. Patent No. 3,354,078 and in The Journal of Catalysis, Vol. IV, pp. 522-529 (August 1965).

The activated high silica crystalline materials prepared by the present process are useful as catalyst components for a variety of organic, e.g. hydrocarbon, compound conversion processes. Such conversion processes include cracking hydrocarbons with reaction conditions including a temperature of from 300°C to 700°C, a pressure of from 10 to 3039 kPa (0.1 to 30 atmospheres) and a weight hourly space velocity of from 0.1 to 20; dehydrogenating hydrocarbon compounds with reaction conditions including a temperature of from 300°C to 700°C, a pressure of from 10 to 1013 kPa (0.1 to 10 atmospheres) and a weight hourly space velocity of from 0.1 to 20; converting paraffins to aromatics with reaction conditions including a temperature of from 100°C to 700°C, a pressure of from 10 to 6078 kPa (0.1 to 60 atmospheres), a weight hourly space velocity of from 0.5 to 400 and a hydrogen/hydrocarbon mole ratio of from 0 to 20; converting olefins to aromatics, e.g. benzene, toluene and xylenes, with reaction conditions including a temperature of from 100°C to 700°C, a pressure of from 10 to 6078 kPa (0.1 to 60 atmospheres), a weight hourly space velocity of from 0.5 to 400 and a hydrogen/hydrocarbon mole ratio of from 0 to 20; converting alcohols, e.g. methanol, or others, e.g. dimethylether, or mixtures thereof to hydrocarbons including aromatics with reaction conditions including a temperature of from 275°C to 600°C, a pressure of from 51 to 5065 kPa (0.5 to 50 atmospheres) and a liquid hourly space velocity of from 0.5 to 100; isomerizing xylene feedstock components with reaction conditions including a temperature of from 230°C to 510°C, a pressure of from 304 to 3546 kPa (3 to 35 atmospheres), a weight hourly space velocity of from 0.1 to 200 and a hydrogen/hydrocarbon mole ratio of from 0 to 100; disproportionating toluene with reaction conditions including a temperature of from 200°C to 760°C, a pressure of from 101 to 6078 kPa (1 to 60 atmospheres) and a weight hourly space velocity of from 0.08 to 20; alkylating aromatic hydrocarbons, e.g. benzene and alkylbenzenes, in the presence of an alkylating agent, e.g. olefins, formaldehyde, alkyl halides and alcohols, with reaction conditions including a temperature of from 340°C to 500°C, a pressure of from 101 to 20260 kPa (1 to 200 atmospheres), a weight hourly space velocity of from 2 to 2000 and an aromatic hydrocarbon/alkylating agent mole ratio of from 1/1 to 20/1; and transalkylating aromatic hydrocarbons in the presence of polyalkyaromatic hydrocarbons with reaction conditions including a temperature of from 340°C to 500°C, a pressure of from 101 to 20260 kPa (1 to 200 atmospheres), a weight hourly space velocity of from 10 to 1000 and an aromatic hydrocarbon/polyalkylaromatic hydrocarbon mole ratio of from 1/1 to 16/1.

In practicing a desired chemical conversion process, it may be useful to incorporate the above-described activity enhanced crystalline material with a matrix comprising another material resistant to the temperature and other conditions employed in the process. Such matrix material is useful as a binder and imparts greater resistance to the catalyst for the severe temperature, pressure and reactant feed stream velocity conditions encountered in many conversion processes.

Useful matrix materials include both synthetic and naturally occurring substances, as well as inorganic materials such as clay, silica and/or metal oxides. The latter may be either naturally occurring or in the form of gelatinous precipitates or gels including mixtures of silica and metal oxides. Naturally occurring clays which can be composited with the zeolite include those of the montmorillonite and kaolin families, which families include the sub-bentonites and the kaolins commonly known as Dixie, McNamee, Georgia and Florida clays or others in which the main mineral constituent is halloysite, kaolinite, dickite, nacrite or anauxite. Such clays can be used in the raw state as originally mined or initially subjected to calcination, acid treatment or chemical modification.

In addition to the foregoing materials, the zeolites employed herein may be composited with a porous matrix material such as alumina, silica-alumina, silica-magnesia, silica-zirconia, silica-thoria, silica-beryllia, and silica-titania, as well as ternary compositions, such as silica-alumina-thoria, silica-alumina-zirconia, silica-alumina-magnesia and silica-magnesis-zirconia. The matrix may be in the form of a cogel. The relative proportions of activity enhanced zeolite component and inorganic oxide gel matrix, on an anhydrous basis, may vary widely with the zeolite content ranging from between 1 to 99 percent by weight and more usually in the range of 5 to 80 percent by weight of the dry composite.

The following examples will illustrate the process of the present invention.

## EXAMPLES

The aluminum containing reagents used in the following examples are commercially available.

### Example 1

A 3g sample of HZSM-5 ($SiO_2:Al_2O_3$ molar ratio of 26,000 and alpha value 0.015) was mixed with 0.52g aluminum acetylacetonate. It was then slurried with liquid ammonia. The ammonia was evaporated at ambient temperature, then at 130°C. The impregnated zeolite was calcined at 538°C and then tested for hexane cracking, as set forth in Table 1.

### Example 2

A 3-gram sample of the same HZSM-5 was treated as in Example 1 except that ethanol was used as the solvent.

The Alpha Value of the resultive product was determined and is recorded in Table 1.

### Example 3

A 3-gram sample of the same HZSM-5 as in Example 1 was mixed with 0.7g aluminum isopropoxide (mp 130-132°C). The mixture was placed in an oven at 140-160°C for 2 hours stirring at 5 minute intervals to disperse the liquid. It was then calcined at 538°C, exchanged with 1 N ammonium nitrate, and recalcined. The Alpha Value of that product was determined and is set forth in Table 1.

### Example 4

A 2g sample of the same ZSM-5 was treated as in Example 2 except that 1g aluminum sec-butoxide was used as the aluminum source. The Alpha Value of the product was determined and is set forth in Table 1.

Table 1

## Table 1

| Example | Treat | Alpha | Constraint Index |
|---------|-------|-------|------------------|
| Parent | None | 0.015 | |
| 1 | Al–AcAc/$NH_3$ | 3.3 | 2.5 |
| 2 | Al–AcAc/EtOH | 3.6 | |
| 3 | Al(iPrO)$_3$ | 1.0 | |
| 4 | Al(sec BuO)$_3$ | 4.9 | |

The above data show activity increases of 60 to 300%. The lower result in Example 3 can be explained by the small volume of molten aluminum isopropoxide which was only about 10% of the zeolite volume. It appears that some of the zeolite was not contacted with the aluminum isopropoxide.

**Claims**

1. A process for activating a zeolite containing at least about 98 mole percent $SiO_2$, comprising

impregnating the zeolite with a liquid containing a source of aluminum in which aluminum is bonded to or coordinated with an oxygen atom, said oxygen atom being bonded to a hydrocarbyl group of 1 to 18 carbon atoms and being selected from alkyl, alkylene, aryl, alkylaryl and alkylenearyl groups, wherein each of said hydrocarbyl groups is unsubstituted or substituted by at least one group selected from -OH, -COOH, $-NH_2$, $-N(CH_2COOH)_2$ and $-COCH_3$; and

calcining the impregnated zeolite at a temperature sufficient to remove said hydrocarbyl group from the zeolite and produce a zeolite of increased framework aluminum content.

2. The process of Claim 1, which includes the additional step of converting the zeolite of increased aluminum content to its acid form.

3. The process of Claim 2, wherein said acid form is produced by subjecting the zeolite of increased aluminum content to ammonium ion exchange and then heating the ammonium ion exchanged zeolite to remove ammonia.

4. The process of Claim 1, wherein said liquid is a solution of the aluminum source.

5. The process of Claim 4, wherein said solution is anhydrous.

6. The process of Claim 5, wherein the solvent is liquid ammonia or ethanol.

7. The process of any one of claims 1 to 3 , wherein the source of aluminum is molten.

8. The process of any preeding claim wherein said hydrocarbyl group has 1 to 10 carbon atoms.

9. The process of any preceding claim wherein said aluminum source is an aluminum alkoxide and wherein the alkoxide has 1 to 4 carbon atoms.